# DEMANDE DE BREVET EUROPEEN

(11) **EP 0 654 321 A1**
(43) Date de publication de la demande: **24.05.1995**
(21) Numéro de dépôt: 94402623.6
(22) Date de dépôt: 17.11.1994
(51) Int. Cl.: B23P 15/00, B62D 21/00, B21D 47/01, E04C 3/07

(54) **Procédé de fabrication d'un longeron de véhicule de transport et longeron obtenu par ce procédé**

(30) Priorité: 23.11.1993 FR 9314009
(71) Demandeur: GPRI (Société Anonyme), F-92110 Clichy (FR)
(72) Inventeur: Rousee, Denis, F-60155 Rainvillers (FR)
(74) Mandataire: Ventavoli, Roger

(57) **Abrégé**

L'invention a pour objet un procédé de fabrication d'un longeron (1) de véhicule de transport routier ou ferroviaire. Le procédé consiste à former, par profilage à froid d'une bande d'acier, un profilé comportant une âme (2) et deux ailes (3, 4) s'étendant sur toute la longueur de l'âme (2) et perpendiculaires à ladite âme (2), à découper, sur au moins une partie de la longueur du profilé, une aile (3) ou une aile (3) et une portion de l'âme (2) adjacente à cette aile (3) et à plier, au niveau de la partie découpée, l'âme (2) sur une partie de sa hauteur pour reformer une aile (3a) et obtenir, au niveau de ladite partie découpée, une âme (2a) ayant une hauteur inférieure à la hauteur de l'âme (2b) dans l'autre partie du profilé (10).

L'invention a également pour objet un longeron de véhicule de transport routier ou ferroviaire obtenu par ce procédé.

## Description

La présente invention a pour objet un procédé de fabrication d'un longeron de véhicule de transport routier ou ferroviaire et un longeron obtenu par ce procédé.

Les longerons couramment utilisés dans les structures de caisse de véhicules de transport routier ou ferroviaire sont généralement constitués d'un profilé comportant une âme dont le plan est parallèle à l'axe des efforts dûs à la charge supportée par ledit longeron et de deux ailes s'étendant sur toute la longueur de l'âme et perpendiculaires à ladite âme.

Ces profilés peuvent être obtenus par filage, c'est-à-dire par laminage à chaud.

Cependant, les techniques de filage ont pour inconvénient, d'une part, d'être coûteuses et, d'autre part, de ne pas permettre l'élaboration de profilés de section spécifique.

De plus, il n'est pas possible de réaliser par filage à chaud des profilés possédant des caractéristiques mécaniques en limite élastique élevée, l'acier utilisé étant généralement un acier dont la limite élastique est inférieure à 240 MPa.

Par ailleurs, dans le domaine automobile ou ferroviaire, la masse transportée des pièces constituant la structure du véhicule doit être réduite autant que possible en respectant les contraintes mécaniques desdites pièces.

D'autre part, les profilés utilisés jusqu'à présent ont une épaisseur constante sur toute leur longueur ce qui présente des inconvénients dans le cas où ces profilés servent de longerons de support d'une plate-forme de chargement d'un véhicule.

En effet, les longerons sont en appui à chaque extrémité sur des essieux si bien que la hauteur de la plate-forme entre les essieux correspond à celle de ladite plate-forme au niveau des essieux ce qui limite le volume disponible pour la charge à transporter, d'autant plus que les véhicules ne doivent pas dépasser une hauteur maximale déterminée par des normes internationales.

L'invention a pour but d'éviter ces inconvénients en proposant un procédé de réalisation d'un longeron qui permet de donner audit longeron des caractéristiques de forme et mécaniques déterminées dans des zones localisées.

L'invention a donc pour objet un procédé de fabrication d'un longeron de véhicule de transport routier ou ferroviaire, selon lequel on forme, par profilage à froid d'une bande d'acier, un profilé comportant, d'une part, une âme dont le plan est parallèle à l'axe des efforts dûs à la charge à supporter par ledit longeron et, d'autre part, deux ailes s'étendant sur toute la longueur de l'âme et perpendiculaires à ladite âme, caractérisé en ce qu'il consiste à découper, sur une partie de la longueur du profilé, une aile ou une aile et une portion de l'âme adjacente à cette aile et à plier, au niveau de la partie découpée, l'âme sur une partie de sa hauteur pour reformer une aile et obtenir, au niveau de ladite partie découpée, une âme ayant une hauteur inférieure à la hauteur de l'âme dans l'autre partie du profilé.

Selon d'autres caractéristiques de l'invention :
- on réalise par matriçage le pliage de l'âme du profilé au niveau de la partie découpée,
- on réalise le découpage de l'aile ou de l'aile et de la portion de l'âme adjacente à cette aile et le pliage de l'âme du profilé au niveau d'au moins une extrémité dudit profilé,
- on déforme localement le profilé dans un plan perpendiculaire à l'âme pour que le plan passant par l'âme de la partie déformée du profilé soit parallèle au plan passant par l'âme de la partie non déformée dudit profilé.

L'invention a également pour objet un longeron de véhicule de transport routier ou ferroviaire obtenu par le procédé mentionné ci-dessus, du type comportant un profilé muni d'une âme dont le plan est parallèle à l'axe des efforts dûs à la charge à supporter par ledit longeron et de deux ailes s'étendant sur toute la longueur de l'âme et perpendiculaires à ladite âme, caractérisé en ce qu'il comporte, sur une partie, de la longueur du profilé, une portion dont l'âme a une hauteur inférieure à la hauteur de l'âme sur l'autre partie du profilé.

Selon d'autres caractéristiques de l'invention :
- l'âme a une hauteur inférieure au niveau d'au moins une extrémité du profilé,
- la portion de l'âme a une hauteur continûment variable pour que le plan passant par la portion de l'aile forme un angle déterminé avec l'autre portion de ladite aile,
- le profilé comporte localement une déformation dans un plan perpendiculaire à l'âme pour que le plan passant par l'âme au niveau de la déformation soit parallèle au plan passant par l'âme au niveau de la partie non déformée dudit profilé,
- la hauteur de chaque aile est constante sur toute la longueur du profilé,
- l'épaisseur de chaque aile est augmentée par pliage à 180 d'une portion de ladite aile,

Les caractéristiques et avantages de l'invention apparaîtront au cours de la description qui va suivre, donnée uniquement à titre d'exemple et faite en référence aux dessins annexés, sur lesquels :
- la Fig. 1 est une vue schématique en perspective d'un longeron selon l'invention,
- les Figs. 2 à 5 sont des vues schématiques en perspective montrant les différentes étapes du procédé de fabrication du longeron selon l'invention,
- la Fig. 6 est une vue schématique partielle en perspective d'une variante du longeron selon l'invention,
- la Fig. 7 est une vue schématique en élévation d'un véhicule routier dont la remorque est équipée de longerons selon l'invention,
- la Fig. 8 est une vue de dessus de la Fig. 7.

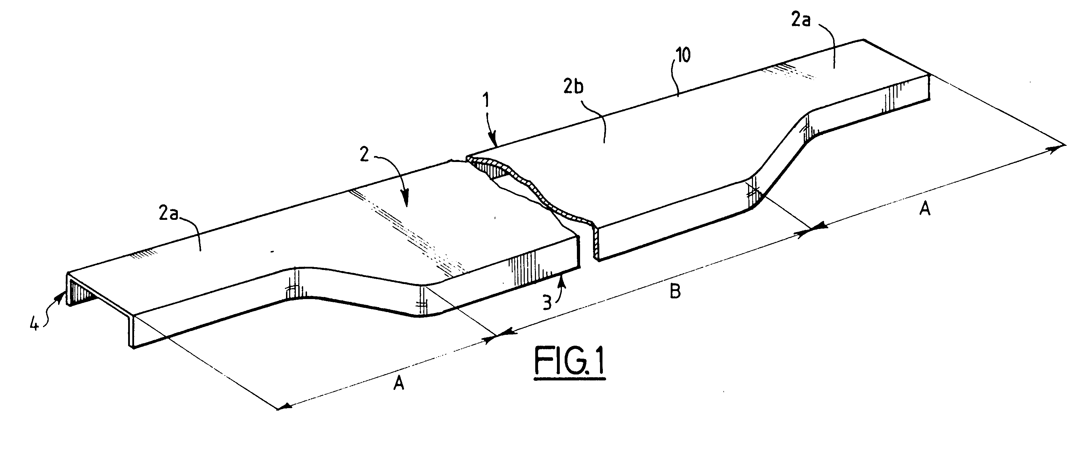

Sur la Fig. 1, on a représenté un longeron de véhicule de transport routier ou ferroviaire, désigné dans son ensemble par la référence 1.

Le longeron 1 peut être utilisé soit pour le véhicule, comportant des moyens de traction, soit pour un élément tracté dudit véhicule, comme par exemple une remorque.

Ce longeron 1 est formé d'un profilé 10 muni d'une âme 2 et de deux ailes, respectivement 3 et 4, s'étendant sur toute la longueur de l'âme 2 et perpendiculaires à ladite âme 2.

Le plan passant par l'âme 2 est parallèle à l'axe des efforts dûs à la charge à supporter par le longeron.

Ainsi que représenté à la Fig. 1, le longeron 1 comporte, sur au moins une partie A de la longueur du profilé 10, une portion dont l'âme 2a a une hauteur inférieure à la hauteur de l'âme 2b sur l'autre partie B dudit profilé 10.

La partie A de la longueur du profilé 10 au niveau de laquelle la portion dont l'âme 2a a une hauteur inférieur à la hauteur de l'âme 2b sur l'autre partie B de ce profilé est constituée, soit par une extrémité du profilé 10, soit par les deux extrémités dudit profilé 10, comme représenté à la Fig. 1.

Selon une variante, la partie A de la longueur du profilé 10 au niveau de laquelle une portion de l'âme 2a a une hauteur inférieure à la hauteur de l'âme 2b sur l'autre partie B dudit profilé 10, peut être réalisée sur une partie quelconque dudit profilé. En d'autres termes, une partie A telle que définie peut être réalisée sur un longeron, entre deux partie B.

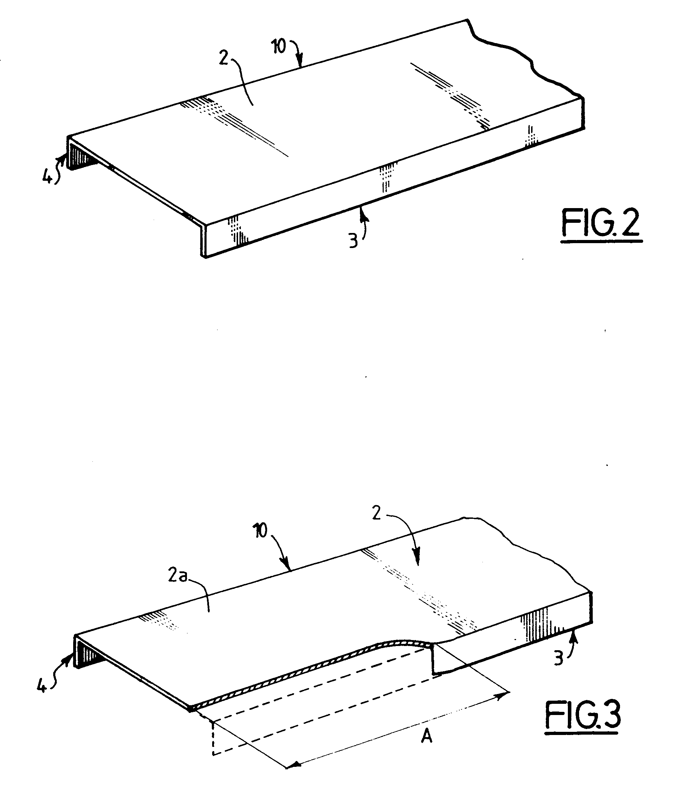

En se reportant maintenant aux Figs. 2 à 5, on va décrire le procédé de fabrication d'un longeron 1 selon l'invention.

Le procédé consiste tout d'abord à former, par profilage à froid d'une bande d'acier, un profilé 10 comportant, d'une part, une âme 2 dont le plan est parallèle à l'axe des efforts dûs à la charge à supporter par le longeron et, d'autre part, deux ailes, respectivement 3 et 4, s'étendant sur toute la longueur de l'âme 2 et perpendiculaires à ladite âme 2, comme représenté à la Fig. 2.

Après la réalisation de ce profilé 10, le procédé consiste à découper, sur au moins une partie A de la longueur du profilé 10, soit une aile comme par exemple l'aile 3, et une portion de l'âme 2 adjacente à cette aile 3, comme représenté à la Fig. 3.

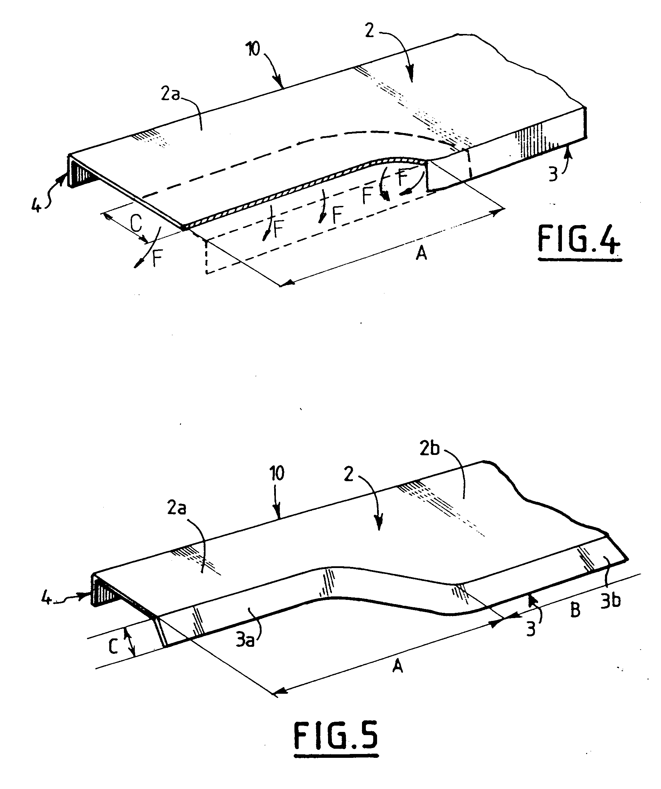

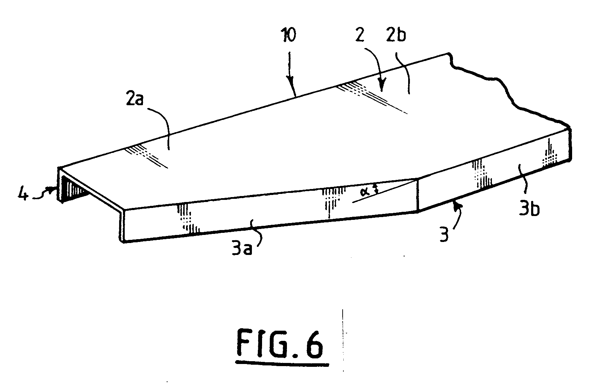

Ensuite, le procédé consiste à déformer progressivement, au niveau de la partie A découpée l'âme 2 sur une partie C de sa hauteur. Comme représenté à la Fig. 4, la déformation suivant les flèches F consiste d'une part, en un dépliage de l'aile 3 sur une partie de sa longueur, et d'autre part, un repliage pour reformer une aile 3a et obtenir, au niveau de la partie A découpée, une âme 2a ayant une hauteur inférieure à la hauteur de l'âme 2b dans l'autre partie B du profilé 10, comme représenté sur la figure 5.

Le pliage de l'âme 2a du profilé 10 au niveau de la partie A découpée est réalisé par exemple par matriçage.

Le découpage de l'aile 3 et de la portion de l'âme 2 adjacente à cette aile 2 et le pliage de l'âme 2 du profilé sont réalisés au niveau d'une extrémité du profilé 10, ou au niveau des deux extrémités de ce profilé 10 ou encore sur une portion quelconque dudit profilé 10.

Selon une variante représentée à la Fig. 6, la portion 2a de l'âme 2 a une hauteur continûment variable sur une partie A de la longueur du profilé 10, pour que le plan passant par la portion 3a de l'aile 3 forme un angle déterminé avec l'autre portion 3b de ladite aile 3.

Le profilé 10 constituant le longeron 1 selon l'invention possède, sur au moins une partie de sa longueur, un moment d'inertie déterminé variable par rapport au moment d'inertie de la section générale dudit profilé.

La hauteur de chaque aile 3 et 4 est constante sur toute la longueur du profilé et l'épaisseur de chaque aile 3 et 4 peut être augmentée par pliage à 180 C d'une portion de ladite aile.

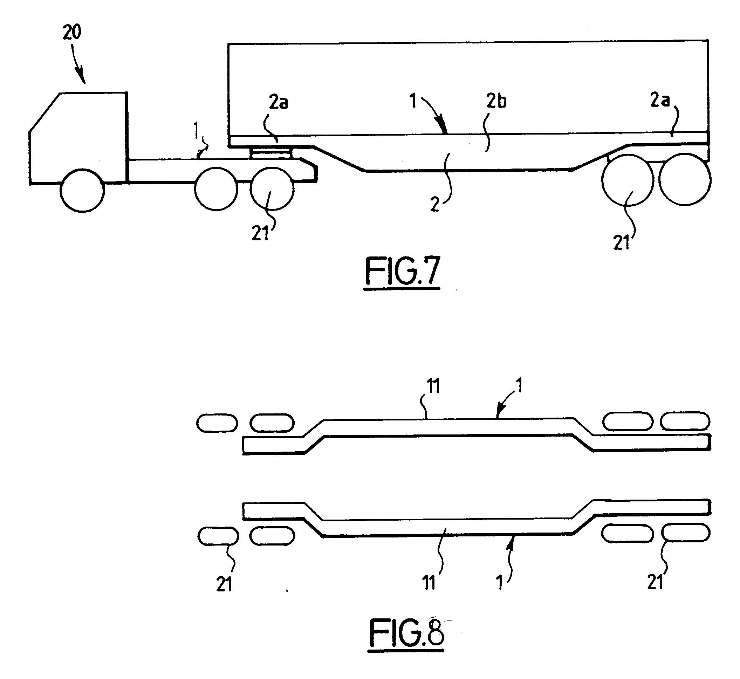

Sur la Fig. 7, on a représenté schématiquement un véhicule routier 20 comportant un chassis composé de longerons 1 selon l'invention, et une remorque équipée de deux longerons 1 parallèles, selon l'invention.

Ces longerons 1 sont en appui sur des essieux 21.

Le profilé formant ces longerons 1 possède une portion dont l'âme 2a a une hauteur inférieure à la hauteur de l'âme 2b sur l'autre partie du profilé ce qui permet d'abaisser la hauteur du longeron 1 par rapport au sol et de ce fait la hauteur de la plate-forme de chargement du véhicule.

Ainsi, le volume de chargement du véhicule équipé de longerons 1 selon l'invention est de ce fait augmenté.

Selon une variante représentée à la Fig. 8, le profilé 10 du longeron 1 comporte localement une déformation 11 dans un plan perpendiculaire à l'âme 2 pour que le plan passant par l'âme 2 au niveau de la déformation 11 soit parallèle au plan passant par l'âme 2 au niveau de la partie non déformée dudit profilé.

Par ailleurs, l'utilisation pour le longeron selon l'invention d'un acier possédant des caractéristiques élevées en élasticité, permet d'augmenter les performances du longeron en réduisant le poids au mètre linéaire.

Par exemple, la bande profilée à froid est en acier ayant une limite élastique supérieure à 420MPa et de préférence égale à environ 700 MPa.

Le profilé selon l'invention élaboré par profilage à froid permet, en outre, une économie de poids pour une caractéristique mécanique donnée, particulièrement importante pour son usage dans tous véhicules de transport.

Enfin, le profilé selon l'invention s'adapte à toute structure de véhicule en fonction des exigences techniques et esthétiques.

## Revendications

1. Procédé de fabrication d'un longeron (1) de véhicule de transport routier ou ferroviaire, selon lequel on forme, par profilage à froid d'une bande d'acier, un profilé (10) comportant, d'une part, une âme (2) dont le plan est parallèle à l'axe des efforts dûs à la charge supportée par ledit longeron (1) et, d'autre part, deux ailes (3, 4) s'étendant sur toute la longueur de l'âme (2) et perpendiculaires à ladite âme (2), caractérisé en ce qu'il consiste à découper, sur au moins une partie A de la longueur du profilé (10), une aile (3) ou une aile (3) et une portion de l'âme (2) adjacente à cette aile (3) et à plier, au niveau de la partie A découpée, l'âme (2) sur une partie de sa hauteur pour former une aile (3a) et obtenir, au niveau de la partie A découpée, une âme (2a) ayant une hauteur inférieure à la hauteur de l'âme (2b) dans l'autre partie B du profilé (10).

2. Procédé selon la revendication 1, caractérisé en ce que l'on réalise par matriçage le pliage de l'âme (2) du profilé au niveau de la partie A découpée.

3. Procédé selon la revendication 1 et 2, caractérisé en ce que l'on réalise le découpage de l'aile (3) ou de l'aile (3) et de la portion de l'âme (2) adjacente à cette aile (3) et le pliage de l'âme (2) du profilé (10) au niveau d'au moins une extrémité dudit profilé (10).

4. Procédé selon l'une des revendication 1 à 3, caractérisé en ce que l'on déforme localement le profilé (10) dans un plan perpendiculaire à l'âme (2) pour que le plan passant par l'âme (2) de la partie déformée du profilé (10) soit parallèle au plan passant par l'âme (2) de la partie non déformée dudit profilé (10).

5. Longeron de véhicule de transport routier ou ferroviaire, obtenu par le procédé selon l'une quelconque des revendications 1 à 4, du type comportant un profilé (10) muni d'une âme (2) dont le plan est parallèle à l'axe des efforts dûs à la charge à supporter par ledit longeron (1) et de deux ailes (3, 4) s'étendant sur toute la longueur de l'âme (2) et perpendiculaires à ladite âme (2), caractérisé en ce qu'il comporte, sur au moins une partie A de la longueur du profilé (10), une portion dont l'âme (2a) a une hauteur inférieure à la hauteur de l'âme (2b) sur l'autre partie B du profilé.

6. Longeron selon la revendication 5, caractérisé en ce que l'âme (2a) a une hauteur inférieure au niveau d'au moins une extrémité du profilé (10).

7. Longeron selon les revendications 5 et 6, caractérisé en ce que la portion (2a) de l'âme (2) a une hauteur continûment variable pour que le plan passant par la portion (3a) de l'aile (3) forme un angle déterminé avec l'autre portion (3b) de ladite aile (3).

8. Longeron selon l'une quelconque des revendications 5 à 7, caractérisé en ce que le profilé (10) comporte localement une déformation (11) dans un plan perpendiculaire à l'âme (2) pour que le plan passant par l'âme (2) au niveau de la déformation (11) soit parallèle au plan passant par l'âme (2) au niveau de la partie non déformée dudit profilé (10).

9. Longeron selon l'une quelconque des revendications 5 à 8, caractérisé en ce que la hauteur de chaque aile (3, 4) est constante sur toute la longueur du profilé (10).

10. Longeron selon l'une quelconque des revendications 5 à 8, caractérisé en ce que l'épaisseur de chaque aile (3, 4) est augmentée par pliage à 180 d'une portion de ladite aile.
